# EUROPÄISCHE PATENTANMELDUNG

(11) **EP 2 249 495 A1**
(43) Veröffentlichungstag der Anmeldung: **10.11.2010**
(21) Anmeldenummer: 09006144.1
(22) Anmeldetag: 06.05.2009
(51) Int. Cl.: H04H 20/63, H04N 7/10

(54) **Verfahren und Vorrichtung zum Umsetzen von Satellitensignalen**

(71) Anmelder: Kurt Wolf GmbH & Co. KG, 75232 Bad Wildbad (DE)
(72) Erfinder: Jäger, Manfred, 75210 Keltern (DE)
(74) Vertreter: Fleck, Hermann-Josef

(57) **Zusammenfassung**

Die Erfindung betrifft ein Verfahren zum Umsetzen von Satellitensignalen, wobei die Satellitensignale Transponder enthalten, mit denen digitale Rundfunk-Signale übermittelbar sind, wobei mittels einer Umsetzeinheit die Transponder in ihrer originalen Form in ein für einen Receiver lesbares Frequenzband umgesetzt werden. Wenn dabei vorgesehen ist, dass mittels der Umsetzeinheit die Transponder in ein für den Empfang analoger Rundfunk-Signale ausgelegtes Installationsnetz umgesetzt werden, dann können kostengünstig und flächendeckend Gebiete für den digitalen Rundfunk erschlossen werden, in denen bisher nur Analogrundfunk terrestrisch übertragen wurde.

## Beschreibung

Die Erfindung betrifft ein Verfahren zum Umsetzen von Satellitensignalen, wobei die Satellitensignale Transponder enthalten, mit denen digitale Rundfunk-Signale übermittelbar sind, wobei mittels einer Umsetzeinheit die Transponder in ihrer originalen Form in ein für einen Receiver lesbares Frequenzband umgesetzt werden.

Die Erfindung betrifft weiterhin eine Vorrichtung zum Umsetzen von Satellitensignalen, die Rundfunk-Signale übermittelnde Transponder enthalten, mit einer Umsetzeinheit, die die Transponder in ein für einen Receiver lesbares Frequenzband umsetzt.

Aus dem Stand der Technik sind Rundfunk-Signal-Empfänger, beispielsweise TV-Daten- oder Radioempfänger, bekannt, die das digitale Signal eines Satelliten empfangen. Dieses Signal wird in einer Empfangsschaltung aufbereitet und dann über ein spezielles für die Signalübertragung geeignetes Hausinstallationsnetz in die jeweiligen Wohneinheiten verteilt. Dort wird das aufbereitete Signal in einem Receiver weiter verarbeitet und letztendlich an einem Empfangsgerät, beispielsweise Fernsehgerät, ausgegeben. In der Empfangsschaltung werden die mit dem Digital-Signal versandten Transponder, in denen gruppenweise mehrere Dienste, beispielsweise Programme, codiert sind, auf einem Frequenzband aneinander gereiht. Dabei wird jedem Transponder innerhalb dieses Frequenzbandes ein spezieller vorgegebener Frequenzbereich zugeordnet. In Europa wird derzeit von terrestrisch analoger Rundfunk-Signalübertragung auf digitale Rundfunksignal-Übertragungen umgestellt. Dabei besteht die Problematik, dass die Kosten für eine flächendeckende Versorgung mit terrestrisch digitalen Signalen nicht gerechtfertigt scheinen. Infolge dessen entstehen Gebiete, die allein auf den Satellitenempfang angewiesen sind. In den Häusern dieser Gebiete muss dann eine Anpassung des Haus-Installationsnetzes auf die Übertragung des Satellitensignals vorgenommen werden. Dabei entsteht ein hoher Inntallationsaufwand. In Hausgemeinschaften wird zudem eine Zustimmung der Eigentümerversammlung nötig.

Es ist Aufgabe der Erfindung, ein Verfahren beziehungsweise eine Vorrichtung der eingangs erwähnten Art bereitzustellen, wobei mit geringem technischem Aufwand eine Umstellung auf oder Nachrüstung von Digitalrundfunk möglich ist.

Diese Aufgabe wird dadurch gelöst, dass mittels der Umsetzeinheit die Transponder in ein für den Empfang analoger Rundfunk-Signale ausgelegtes Installationsnetz umgesetzt werden.

Erfindungsgemäß wird nicht, wie sonst üblich, das digitale Rundfunk-Signal schlicht innerhalb des Frequenzbereiches, in dem dieses gesendet wird, im Bereich zwischen 950 und 2150 MHz umgesetzt. Für diese Umsetzung ist ein spezielles Installationsnetz erforderlich, das für die fehlerfreie Weiterleitung dieser Frequenzen geeignet ist. In den Gebieten, in denen derzeit kein digitaler Rundfunk angeboten wird, steht aber in den Häusern ein solches spezielles Installationsnetz zumindest teilweise nicht zur Verfügung. Die Erfindung beschreibt nun einen anderen Weg, indem sie die Transponder in ein Frequenzband umsetzt, das eigentlich für eine andere Bestimmung, nämlich für den Empfang analoger Rundfunk-Signale ausgelegt ist. Die Umsetzung erfolgt dabei so, dass die Transponder in ihrer originalen Form, das heißt ohne Informationsverlust, umgesetzt werden. Damit gelingt eine einfache Umrüstung von analogem auf digitalen Rundfunkempfang. Der Endempfänger kann dabei auf seine vorhandene Netzwerkstruktur (Verkabelung, Steckdosen, Verstärker) zurückgreifen, so dass dessen Akzeptanz zur Umstellung gesteigert ist.

Gemäß einer Ausgestaltungsvariante der Erfindung ist es vorgesehen, dass ein Teil der Transponder aus den Satellitensignalen ausgefiltert wird, und dass die ausgefilterten Transponder individuellen Frequenzbereichen zugeordnet werden. Somit werden aus der großen Vielzahl der Transponder nur einige ausgesuchte umgesetzt. Diese können dann auf einem relativ begrenzten Frequenzband auf dem Installationsnetz zuverlässig übertragen werden. Dabei gelingt eine fehlerfreie Übertragung insbesondere dann, wenn vorgesehen ist, dass die ausgefilterten Transponder in ein Frequenzband im Bereich zwischen 47 und 860 MHz umgesetzt werden. Besonders bevorzugt ist es, wenn in einem Frequenzbereich von 250 und 730 MHz umgesetzt wird. Dann können die freibleibenden Frequenzbereiche für andere Dienste, beispielsweise Aufbereitungen einer Kopfstelle, verwendet werden.

Wenn vorgesehen ist, dass die Satellitensignale mittels einer vorzugsweise steuerbaren Schalteinheit in mehrere Filtereinheiten verteilt werden, und dass in den Filtereinheiten jeweils ein, einem Transponder repräsentierendes Frequenzband ausgefiltert wird, dann ergibt sich ein einfacher Aufbau für die Elektronik.

Wenn die gewünschte Frequenz des Transponders ausgefiltert ist, kann sie mit einem Converter erfindungsgemäß in das gewünschte Frequenzband umgesetzt werden.

Eine bevorzugte Erfindungsvariante ist dergestalt, dass in einem Empfänger die Satellitensignale aufgenommen werden, dass in einem µ-Prozessor ein in den Satellitensignalen enthaltenes NIT-Signal (Network-Information-Tabel) ausgewertet wird, und dass der µ-Prozessor über die Schalteinheit die Verteilung der Satellitensignale in die einzelnen Filtereinheiten steuert. Über das NIT-Signal wird eine Information mit den Satellitensignalen übermittelt, die Aufschluss darüber gibt, welcher Transponder auf welchem Frequenzbereich liegt. Wird nun ein Transponder auf einen anderen Frequenzbereich gewechselt, so gewährleistet der µ-Prozessor in Verbindung mit der Schaltmatrix und den Mischern eine Anpassung. Dementsprechend kann dann sichergestellt werden, dass der gewechselte Transponder letztendlich wieder seine umgesetzte Transponderposition (umgesetzter Frequenzbereich) beibehält.

Wenn bei der erfindungsgemäßen Vorrichtung vorgesehen ist, dass an dem µ-Prozessor ein Wartungsanschluss angekoppelt ist, dann kann unmittelbar eine Systemstörung vor Ort behoben werden. Zudem kann eine Änderung in der Transponderauswahl beziehungsweise -Umsetzung damit einfach vorgenommen werden.

Eine einfache Installation und Systemsteuerung kann dann erreicht werden, wenn vorgesehen ist, dass an dem µ-Prozessor eine Eingabetastatur angekoppelt ist.

Die Erfindung wird im Folgenden anhand eines in den Zeichnungen dargestellten Ausführungsbeispiels näher erläutert. Die beiden Zeichnungen zeigen eine Prinzipdarstellung einer Vorrichtung zum Umsetzen von Satellitensignalen Sat₁ bis Sat₄.

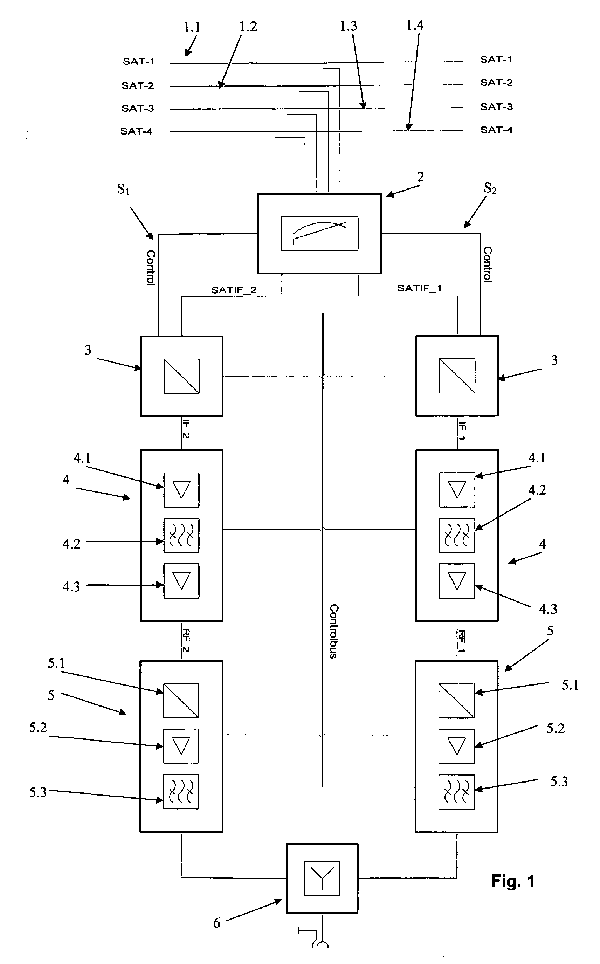

Wie die Fig. 1 zeigt, werden die Satellitensignale Sat₁ bis Sat₄ dabei einer Schalteinheit 2 über Sat-Signalleitungen 1.1 bis 1.4 zugeleitet. Jedes der Satellitensignale Sat₁ bis Sat₄ enthält im Frequenzband zwischen 950 bis 2150 MHz beispielsweise jeweils 30 Transponder, die jeweils einen Frequenzbereich von 40 MHz einnehmen. Jeder der Transponder enthält und codiert einen oder mehrere Dienste, insbesondere Fernsehprogramme. Die Schalteinheiten 2 verteilen die Satellitensignale Sat₁ bis Sat₄ in zwölf Schaltstränge S₁ bis S₁₂, von denen aus Gründen der besseren Übersichtlichkeit vorliegend nur zwei gezeigt sind. Jeweils zwei Schaltsträngen S₁ bis S₁₂ ist jeweils eine Schalteinheit 2 zugeordnet. Die Schaltstränge S₁, S₂ sind insbesondere auch zur Verringerung des konstruktiven Aufwandes zumindest im Wesentlichen baugleich ausgeführt. Sie weisen jeweils einen Mischer 3 auf, dem das von der Schalteinheit 2 zugeführte Satellitensignal Sat₁, Sat₂, Sat₃ oder Sat₄ zugeleitet wird.

In dem Mischer 3 wird dem zugeleiteten Satellitensignal Sat₁, Sat₂, Sat₃ oder Sat₄ eine Frequenz überlagert. Dabei erfolgt die Überlagerung derart, dass der auszuwählende Transponder in einen Frequenzbereich mit einer festgelegten mittleren Frequenz IF₁, bis IF₁₂ verschoben wird, wobei diese Frequenzen IF₁ bis IF₁₂ dann aus wirtschaftlichen Gründen alle gleich sind. Dann kann mit gleichen Filtereinheiten 4 gearbeitet werden. Dementsprechend liegt dieser Transponder dann beispielsweise im Frequenzband zwischen 460 bis 500 MHZ mit einer festgelegten mittleren Frequenz von 480 MHz, nachdem er den Mischer 3 verlässt. Die übrigen Transponder werden aufgrund der Frequenzüberlagerung ebenfalls frequenzmäßig verschoben.

Im Anschluss an den Mischer 3 gelangt das erzeugte Signal IF₁ IF₂ in eine Filtereinheit 4. Die Filtereinheit 4 umfasst einen Verstärker 4,1, in dem das erzeugte Signal IF₁, IF₂ zunächst verstärkt wird. Anschließend durchläuft es ein Filterglied 4.2. Dort wird der ausgewählte Transponder von den diesen vor- und nachgelagerten Frequenzbereichen abgetrennt und anschließend in einem weiteren Verstärker 4.3 verstärkt. Der Filtereinheit 4 ist ein Converter 5 nachgeschaltet. Dieser empfängt das von der Filtereinheit 4 abgegebene Signal RF₁, RF₂, das den ausgewählten Transponder enthält. In einem Mischer 5.1 wird dem Signal RF₁, RF₂ nun eine Frequenz überlagert, die den Transponder in einen Frequenzbereich im Frequenzband zwischen beispielsweise 250 und 730 MHz umsetzt. Dieses Frequenzband bietet Platz für zwölf Transponder mit einem Frequenzbereich von jeweils 40 MHz. Entsprechend wird der in dem ersten Schaltstrang S₁ erzeugte Transponder beispielsweise auf eine Transponderposition im Frequenzbereich von 250 - 290 MHz (mittlere Frequenz 270 MHz) gesetzt. Im Anschluss an den Mischer 5.1 erfolgt eine Signalverstärkung (Verstärker 5.2). Anschließend durchläuft das Signal eine weitere Filtereinheit 5.3 des Converters 5. In dieser wird der umgesetzte Transponder wieder frequenzmäßig isoliert, so dass er den Converter 5 möglichst rauschfrei verlässt.

Die aus den Schaltsträngen S₁ ... S₁₂ kommenden Transponder 1 bis 12 werden in einem Verknüpfer 6 zu einem Signal zusammengefasst, in welchem sie im Frequenzbereich von beispielsweise 250 bis 730 MHz aneinandergereiht sind. Dieses Signal kann über ein eigentlich für die Übertragung von analogen Signalen vorgesehenes Hausinstallationsnetz (Kabel, Verteilerdosen, Verstärker) einem Receiver zugeführt, dort decodiert und in ein Empfangsgerät, beispielsweise TV-Gerät, eingespeist werden.

Mit einem der Satellitensignale Sat₁ ... Sat₄ wird ein Informationssignal (NIT-Signal) übermittelt. Dieses enthält eine Information über die Zuordnung aller Transponder innerhalb des Übertragungsfrequenzbandes. Dieses NIT-Signal kann in einer Schalteinheit ausgewertet werden.

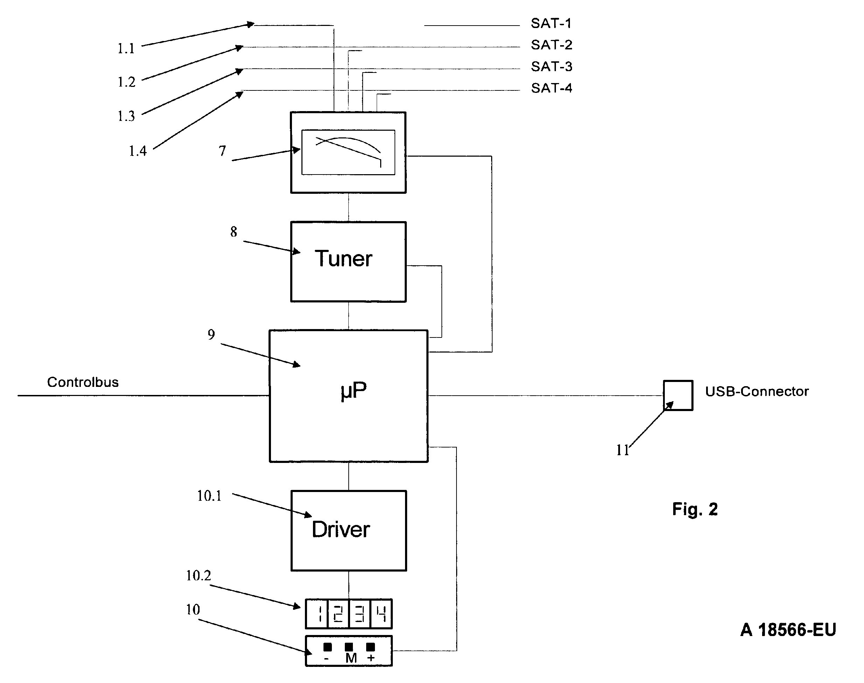

Fig. 2 zeigt diese Schalteinheit. Wie diese Zeichnung erkennen lässt, ist ein Schaltelement 7 an die Sat-Signalleitungen 1.1 bis 1.4 angeschlossen. Dieses Schaltelement 7 entspricht in seiner technischen Ausführung dem Schaltelement 2 gemäß Fig. 1, so dass sich ein geringer Teileaufwand ergibt. Das Schaltelement 7 isoliert das Satellitensignal Sat₁ .... Sat₄, welches das NIT-Signal enthält und leitet es über einen Tuner 8 an einen µ-Prozessor 9. Der µ-Prozessor 9 wertet das NIT-Signal aus. Bei einer signalisierten Statusänderung hinsichtlich der Transponderreihenfolge veranlasst der µ-Prozessor 9 die Schalteinheit 2 und die Mischer 3 zu einer Umschaltung derart, dass das von dem Verknüpfer 6 ausgegebene Signal unverändert bleibt. Dabei wird in dem Mischer 3 auch die Überlagerungsfrequenz geändert.

An dem µ-Prozessor 9 ist ein Wartungsanschluss 11, vorzugsweise ein USB-Anschluss, angekoppelt, über den Wartungsdaten ein- beziehungsweise ausgelesen werden können.

Weiterhin sind an dem µ-Prozessor 9 über eine Anschaltelektronik 10.1 eine LED-Anzeige 10.2 und eine Tastatur 10 angeschlossen. Diese ermöglichen einem Bediener die einfache Systemeinrichtung bzw. -änderung.

## Patentansprüche

1. Verfahren zum Umsetzen von Satellitensignalen, wobei die Satellitensignale Transponder enthalten, mit denen digitale Rundfunk-Signale übermittelbar sind, wobei mittels einer Umsetzeinheit die Transponder in ihrer originalen Form in ein für einen Receiver lesbares Frequenzband umgesetzt werden,
**dadurch gekennzeichnet,**
**dass** mittels der Umsetzeinheit die Transponder in ein für den Empfang analoger Rundfunk-Signale ausgelegtes Installationsnetz umgesetzt werden.

2. Verfahren nach Anspruch 1,
**dadurch gekennzeichnet,**
**dass** ein Teil der Transponder aus den Satellitensignalen ausgefiltert wird, und
**dass** die ausgefilterten Transponder individuellen Frequenzbereichen zugeordnet werden.

3. Verfahren nach Anspruch 1 oder 2,
**dadurch gekennzeichnet,**
**dass** die ausgefilterten Transponder in ein Frequenzband im Bereich zwischen 47 und 860 MHz, insbesondere zwischen 250 bis 730 MHz, umgesetzt werden.

4. Verfahren nach einem der Ansprüche 1 bis 3,
**dadurch gekennzeichnet,**
**dass** die Satellitensignale mittels einer steuerbaren Schalteinheit (2) in mehre re Filtereinheiten (4) verteilt werden, und
**dass** in den Filtereinheiten (4) jeweils ein, einen Transponder repräsentierendes Frequenzband ausgefiltert wird.

5. Verfahren nach einem der Ansprüche 1 bis 3,
**dadurch gekennzeichnet,**
**dass** den von der Schalteinheit (2) kommenden Satellitensignale Sat₁ .... Sat₄ in einem Mischer (3) eine spezielle Frequenz überlagert wird, wobei die spezielle Frequenz so gewählt ist, dass der auszuwählende Transponder auf eine vorgegebene Zwischenfrequenz fällt.

6. Verfahren nach einem der Ansprüche 4 oder 5,
**dadurch gekennzeichnet,**
**dass** in einem an die Filtereinheit (4) angeschlossenen Converter (5) ein umgesetzter Transponder erzeugt wird.

7. Verfahren nach einem der Ansprüche 1 bis 6,
**dadurch gekennzeichnet,**
**dass** in einem Empfänger (8) die Satellitensignale aufgenommen werden,
**dass** in einem µ-Prozessor (9) ein in den Satellitensignalen enthaltenes NIT-Signal ausgewertet wird, und
**dass** der µ-Prozessor (9) über die Schalteinheiten (2) und die Mischer (3) die Verteilung der Satellitensignale in die einzelnen Filtereinheiten steuert.

8. Vorrichtung zum Umsetzen von Satellitensignalen, die Rundfunk-Signale übermittelnde Transponder enthalten, mit einer Umsetzeinheit, die die Transponder in ein für einen Receiver lesbares Frequenzband umsetzt,
**dadurch gekennzeichnet,**
**dass** die Umsetzeinheit die Transponder in ein für dem Empfang analoger Rundfunk-Signale ausgesetztes Installationsnetz geeignetes Format umsetzt, und
**dass** die Transponder in ihrer originalen Form umgesetzt werden.

9. Vorrichtung gemäß Anspruch 8,
**gekennzeichnet durch** einen der Ansprüche 1 bis 7.

10. Vorrichtung nach einem der Ansprüche 1 bis 9,
**dadurch gekennzeichnet,**
**dass** an dem µ-Prozessor (9) ein Wartungsanschluss (11) angekoppelt ist.

11. Vorrichtung nach einem der Ansprüche 1 bis 10,
**dadurch gekennzeichnet,**
**dass** an dem µ-Prozessor (9) eine Eingabetastatur (10) angekoppelt ist.
